# EUROPÄISCHE PATENTSCHRIFT

(11) **EP 2 131 145 B1**
(45) Veröffentlichungstag und Bekanntmachung des Hinweises auf die Patenterteilung: **15.04.2015**
(21) Anmeldenummer: 09007285.1
(22) Anmeldetag: 02.06.2009
(51) Int. Cl.: G01B 11/24, B05C 5/02, B23K 9/095

(54) **Optische Überwachungseinrichtung**
Optical monitoring device
Dispositif de surveillance optique

(30) Priorität: 06.06.2008 DE 202008007630 U; 09.06.2008 DE 102008027393
(43) Veröffentlichungstag der Anmeldung: 09.12.2009
(73) Patentinhaber: ISRA Vision AG, 64297 Darmstadt (DE)
(72) Erfinder: Bachem, Alexander, 64297 Darmstadt (DE); Westenhöfer, Matthias, 77654 Offenburg (DE); Hohm, Karlheinz, 63853 Mömlingen (DE)
(74) Vertreter: Keil & Schaafhausen Patent- und Rechtsanwälte

(56) Entgegenhaltungen:
- EP-A1- 1 697 061
- DE-A1- 19 948 837
- DE-C1- 4 000 988
- US-A- 5 699 152
- US-A- 5 912 776
- US-A1- 2003 020 916

## Beschreibung

Die vorliegende Erfindung betrifft eine optische Überwachungseinrichtung zur Überwachung der Tätigkeit eines Werkzeugs in einem Überwachungsbereich mit mindestens einer Kamera.

Eine derartige Überwachungseinrichtung ist für eine Vielzahl von Werkzeugen geeignet und nicht auf ein bestimmtes Werkzeug beschränkt. So kann das Werkzeug beispielsweise ein Schweiß-, Niet- oder Lötgerät, eine Einrichtung zum Auftragen von Klebstoff, z. B. in Form einer Kleberaupe, auf ein zu verklebendes Werkstück, ein allgemeines Sensorelement, beispielsweise zur Abtastung von Oberflächen, oder ein beliebiges Arbeitsgerät oder Applikationswerkzeug sein, dessen Tätigkeit überwacht werden soll. Weitere Anwendungsfälle für eine derartige Überwachungseinrichtung sind die Inspektion z.B. im Rahmen der Qualitätskontrolle und/oder die Bearbeitung von Objekten wie einer Kleberaupe, einer Naht, einer Fuge, einer Kante und/oder einer Fläche. Eine erfindungsgemäße optische Überwachungseinrichtung ist besonders geeignet für im Roboterbetrieb betätigte Werkzeuge, deren Funktion überwacht werden soll.

Die Überwachungseinrichtung überwacht die Tätigkeit eines derartigen Werkzeugs in einem Überwachungsbereich, der beispielsweise den unmittelbaren Arbeitsbereich des Werkzeugs umfassen kann. Unter dem Arbeitsbereich des Werkzeugs ist hierbei der sich ggf. in drei Dimensionen erstreckende Bereich zu verstehen, in dem das Werkzeug arbeitet. Ferner kann der Überwachungsbereich auch einen sich ggf. in drei Dimensionen erstreckenden Bereich umfassen, welcher nicht der Arbeitsbereich des Werkzeugs ist, jedoch vorzugsweise mit der Tätigkeit des Werkzeugs in Zusammenhang steht, beispielsweise einen Bereich, welcher sich an den Arbeitsbereich anschließt und zur Qualitätskontrolle des im Arbeitsbereich bearbeiteten Objekts dient.

Die Druckschrift US 5,912,776 offenbart eine Bildempfangseinrichtung mit einem ringförmigen Spiegel zur Inspektion des Inneren einer Dose. Die Kamera ist oberhalb des Ringspiegels derart angeordnet, dass die Achse der Blickrichtung der Kamera auf der Achse des Ringspiegels verläuft.

Gleiches gilt auch für die Druckschrift US 5,699,152, welche ein System beschreibt, das analog zu dem in US 5,912,776 beschriebenen System arbeitet. Insbesondere ist auch hier die Kamera oberhalb des Spiegels mit Blickrichtung entlang der Spiegelachse angeordnet, so dass die Innenkontur einer Flasche oder Dose beobachtet wird,

In der Druckschrift US 2003/0020916 A1 wird ein System zur Inspektion einer Oberfläche dargestellt, bei der eine auf eine konkav gekrümmte Oberfläche eines Spiegels gerichteter Detektor das von einer Probe reflektierte Licht empfängt.

In der Druckschrift DE 203 07 305 U1 ist bereits eine optische Überwachungseinrichtung zur Überwachung eines Arbeitsbereichs und/oder Überwachungsbereichs mit mindestens einer Kamera dargestellt. Die bekannte Überwachungseinrichtung ist an dem Werkzeug derart festlegbar, dass der Sichtbereich der Kamera bei einer Bewegung des Werkzeugs und/oder eines zu bearbeitenden Objekts immer auf den Überwachungsbereich ausgerichtet ist. In einer bevorzugten Ausführungsform ist die optische Überwachungseinrichtung derart ausgebildet, dass sich die Sichtbereiche mindestens zweier, vorzugsweise dreier Kameras im Überwachungsbereich überlappen.

Eine ähnliche Vorrichtung zum Erkennen einer auf einem Substrat aufzubringenden Struktur, vorzugsweise einer Kleberaupe oder Klebespur, ist aus den Druckschriften EP 1 697 061 B1 und EP 1 701 801 B1 bekannt. Die Sensoreinheit einer derartigen Vorrichtung weist mehrere Kameras auf, wobei die Kameras jeweils auf die Einrichtung zum Auftragen der Struktur ausgerichtet und um diese herum angeordnet sind.

Aus der Druckschrift DE 40 00 988 C1 ist eine Nähmaschine mit einer Kantenabtastvorrichtung bekannt, welche einen die Nadelstange ringförmig umgebenden ebenen Spiegel aufweist. Der ebene Spiegel hat die Aufgabe, eine konzentrisch zur Stichbildestelle liegende Nähgutfläche senkrecht auf einen vertikal angeordneten Flächensensor verzerrungsfrei abzubilden. Hierfür ist der Spiegel in einem Winkel von 45° zur Oberseite der Grundplatte der Nähmaschine angeordnet.

Die genannten Verfahren haben jedoch den Nachteil, dass das Bildfeld einer Kamera bei einer Vermessung eines dreidimensionalen Objekts (z.B. einer Kleberaupe) insbesondere in Bezug auf die Analyse der Seiten des Objekts nur unzureichend ausgenutzt werden kann. Das zu betrachtende Objekt erfordert für eine derartige Analyse eine Abbildung des Objekts aus einem Umkreis von 360°, wofür bei der Verwendung der herkömmlichen Verfahren der Einsatz vieler Kameras notwendig ist.

Ein weiterer Nachteil bei der Verwendung der bekannten Verfahren besteht darin, dass die Sehstrahlen der Kamera bei der optischen Abbildung mittels einer Kamera auseinanderlaufen, insbesondere wenn kurze Brennweiten verwendet werden. Dies ist dadurch begründet, dass die optische Abbildung einer Kamera im Prinzip eine Zentralprojektion ist. Dies ist nachteilig, wenn beispielsweise eine Klebe- oder Dichtraupe von oberhalb betrachtet und hierdurch Aussagen über die Beschaffenheit des Objekts von der Seite getroffen werden sollen, da je nach Blickwinkel typischerweise eine Flanke schlecht oder auch nicht sichtbar ist.

Die Aufgabe der vorliegenden Erfindung besteht daher darin, eine optische Überwachungseinrichtung zu schaffen, welche eine Analyse eines dreidimensionalen Objekts im Überwachungsbereich mittels einer Kamera insbesondere von allen Seiten ermöglicht, wenn die Kamera jedoch oberhalb des Überwachungsbereichs angeordnet werden soll.

Die obige Aufgabe wird durch eine optische Überwachungseinrichtung nach Anspruch 1 gelöst. Diese weist unter anderem mindestens einen wenigstens in einem Teilbereich konkav gekrümmten ersten Spiegel auf, der im optischen Pfad zwischen Überwachungsbereich und Kamera angeordnet ist.

Der Vorteil einer derartigen erfindungsgemäßen optischen Überwachungseinrichtung besteht darin, dass durch den konkav gekrümmten ersten Spiegel die Sehstrahlen der Kamera derart umgelenkt werden, dass eine Betrachtung des dreidimensionalen Objekts im Überwachungsbereich von einer gewünschten Seite realisiert wird, obwohl die Kamera oberhalb des Überwachungsbereichs angeordnet ist. Insbesondere kann der erste Spiegel so angeordnet werden, dass Flanken gut erkennbar sind.

Ferner wird in vorteilhafter Weise das Bildfeld durch den gekrümmten Spiegel so verformt, dass durch die Kamera ein großer Teil des Überwachungsbereichs abgedeckt werden kann.

Der erste Spiegel ist als Ringspiegel ausgebildet, dessen Innenkontur vorzugsweise im Wesentlichen kreisförmig oder elliptisch ausgebildet ist. Ein derartiger Spiegel lenkt die Sehstrahlen der Kamera so um, dass diese eine Betrachtung des im Überwachungsbereich angeordneten Objekts in einem 360° - Umkreis ermöglicht. Unter Innenkontur des Spiegels wird dabei die am weitesten innen liegende, die bei einer Betrachtung des Spiegels aus Richtung der Längsachse die Kontur des Spiegels ausbildende Linie verstanden. Die durch die Innenkontur begrenzte Aussparung im Ringspiegel dient zur Aufnahme des Werkzeugs.

Weiterhin sind die Kamera und der erste Spiegel derart angeordnet, dass der Sichtbereich der Kamera den Überwachungsbereich von der Seite erfasst, d.h. die Sehstrahlen der Kamera treffen von der Seite kommend auf den Überwachungsbereich auf. Hierbei wird der Überwachungsbereich auf Grund der Auffächerung der Sehstrahlen durch den konkav gekrümmten ersten Spiegel mindestens von einer Seite vorzugsweise von mehreren Seiten gleichzeitig erfasst.

Vorzugsweise ist der erste Spiegel derart gekrümmt, dass der Querschnitt durch den Spiegel zumindest abschnittsweise einen Ellipsen- oder Kreisabschnitt bildet. In einem weiteren bevorzugten Ausführungsbeispiel ist der Mittelpunkt des Querschnitts (wenn dieser zumindest abschnittsweise einen Kreisabschnitt oder Ellipsenabschnitt bildet) durch den Ringspiegel nicht auf der Längsachse des Werkzeugs angeordnet.

Weiterhin sind die Kamera und der erste Spiegel derart angeordnet sind, dass der Sichtbereich der Kamera mindestens teilweise radial zur Längsachse des Werkzeugs verläuft. Hierdurch wird die Auswertung der von der Kamera erzeugten Bilder vereinfacht.

In einem weiteren Ausführungsbeispiel verläuft zumindest eine Komponente der Achse der Blickrichtung der Kamera beim Auftreffen auf den ersten Spiegel radial zu diesem. Ferner ist die Blickrichtung nach außen gerichtet. Durch eine solchen Verlauf der Blickrichtung der Kamera kann das dreidimensionale Objekt in beliebiger Lage von der Seite erfasst werden.

Um eine günstigere Bauform zu erhalten, kann mindestens ein zweiter, vorzugsweise plan ausgebildeter Spiegel vorgesehen sein, der im optischen Pfad zwischen Kamera und erstem Spiegel und/oder erstem Spiegel und Überwachungsbereich angeordnet ist. Ein derartiger Planspiegel kann den Strahlengang der Kamera beliebig oft umlenken.

In einem weiteren Ausführungsbeispiel sind der erste Spiegel und/oder der zweite Spiegel schwenk- oder verschiebbar ausgebildet. Hierdurch wird erreicht, dass die Überwachungseinrichtung einfach an die jeweiligen Gegebenheiten des Überwachungsbereichs angepasst werden kann.

Vorzugsweise sind in der Überwachungseinrichtung mindestens zwei Kameras, vorzugsweise drei oder vier Kameras vorgesehen, die vorzugsweise derart angeordnet sind, dass sich deren Sichtbereiche überlappen. Hierdurch wird der Überwachungsbereich doppelt abgedeckt und eine Redundanz bei der Überwachung erzielt.

Von Vorteil ist weiterhin, wenn der erste Spiegel und die Kamera an dem Werkzeug derart befestigbar sind, dass der Sichtbereich der Kamera immer auf den Überwachungsbereich ausgerichtet ist. Hierdurch wird gewährleistet, dass die Überwachungseinrichtung immer den Überwachungsbereich erfasst und das Nachführen der Überwachungseinrichtung und der damit verbundene gerätetechnische Aufwand vermieden wird.

Für eine qualitativ hochwertige Überwachung kann es von Vorteil sein, wenn während der Überwachung gleichbleibende Lichtverhältnisse vorherrschen. Daher ist es sinnvoll, wenn an der Überwachungseinrichtung eine Beleuchtungseinrichtung vorgehen ist, die aus einem oder mehreren Beleuchtungskörpern oder -segmenten bestehen kann. So wird auch die Beleuchtungseinrichtung mit der Bewegung des Werkzeugs nachgeführt und die Sichtverhältnisse im Überwachungsbereich konstant gehalten. Die Beleuchtungseinrichtung kann speziell an bestimmte Überwachungsaufgaben angepasst werden. Hierzu kann die Beleuchtungseinrichtung in einem Ausführungsbeispiel der erfindungsgemäßen Überwachungseinrichtung als Blitzlicht oder Dauerlicht ausgebildet sein.

Erfindungsgemäß weist die optische Überwachungseinrichtung ferner eine Auswerteeinrichtung, insbesondere ein Computersystem, auf, welches zur Steuerung der Kamera, des ersten Spiegels, des zweiten Spiegels, der Beleuchtungseinrichtung, der Lichtlinieneinrichtung und/oder zur Auswertung der Bilder der Kamera dient. Eine derartige Auswerteeinrichtung ist an die optische Überwachungseinrichtung angeschlossen, empfängt Kameradaten bzw. -signale und wertet diese entsprechend aus. Dabei ist die Auswerteeinrichtung vorzugsweise zur Durchführung von dreidimensionalen Messungen (z.B. über Triangulation) eingerichtet und dient beispielsweise zur Inspektion und/oder Vermessung der durch das Werkzeug ausgeführten Arbeiten im Überwachungsbereich. Dies kann insbesondere durch eine auf den speziellen Anwendungsfall abgestimmte Bilderkennungs-Software erreicht werden. Diese Software kann Bilder analysieren, geometrische Strukturen erkennen, Helligkeitsunterschiede auswerten, einen Vergleich mit Referenzbildern durchführen, Abmessungen bestimmen und/oder eine sonstige geeignete Auswertung der Kamerabilder vornehmen.

Zur Durchführung von dreidimensionalen Messungen gibt es die bevorzugte Möglichkeit, mittels einer Lichtlinieneinrichtung eine ringförmige Lichtlinie senkrecht von oben auf den Überwachungsbereich zu projizieren. Die Lichtlinie kann auch anders geformt sein (z.B mehrere gekrümmte Linien, mehrere gerade Linien.), die Ringform ist jedoch bei einer Anwendung für einen Sichtbereich um einen Applikator herum vorteilhaft. Sind Lichtlinie und Kamera aufeinander kalibriert, kann an jedem Punkt, an dem eine der Kameras der Überwachungseinrichtung die auf das zu vermessenden Objekt treffende Lichtlinie oder Lichtstreifen sieht, eine an sich bekannte Triangulationsmessung durchgeführt und so die dreidimensionale Abmessung des in dem Überwachungsbereich angeordneten dreidimensionalen Objekts bestimmt werden. Zur Kalibrierung können dabei verschiedene bekannt Methoden verwendet werden, z.B. das Aufnehmen einer Kalibrierkennlinie.

Eine weitere Möglichkeit zur dreidimensionalen Messung ist, aus den Bildern je zweier Kameras Stereopaare zu bilden, die unter Berücksichtigung der Anordnung der Kameras sowie des ersten Spiegels und ggf. des zweiten Spiegels ausgewertet werden. Ferner ist es besonders vorteilhaft, wenn die Bildaufnahme mit allen Kameras der Überwachungseinrichtung parallel erfolgt und eine Echtzeitverarbeitung der so erhaltenen Bilder durchgeführt wird, so dass die Kameras zur Vermessung im laufenden Betrieb eingesetzt werden können.

Die erfindungsgemäße Überwachungseinrichtung ist sowohl verwendbar für Werkzeuge, welche sich bewegen, als auch für stationär ausgebildete Werkzeuge, an denen sich ein zu bearbeitendes Objekt vorbei bewegt.

Weiterbildungen, Vorteile und Anwendungsmöglichkeiten der Erfindung ergeben sich auch aus der nachfolgenden Beschreibung eines Ausführungsbeispiels der vorliegenden Erfindung sowie der Figur.

Es zeigt schematisch:

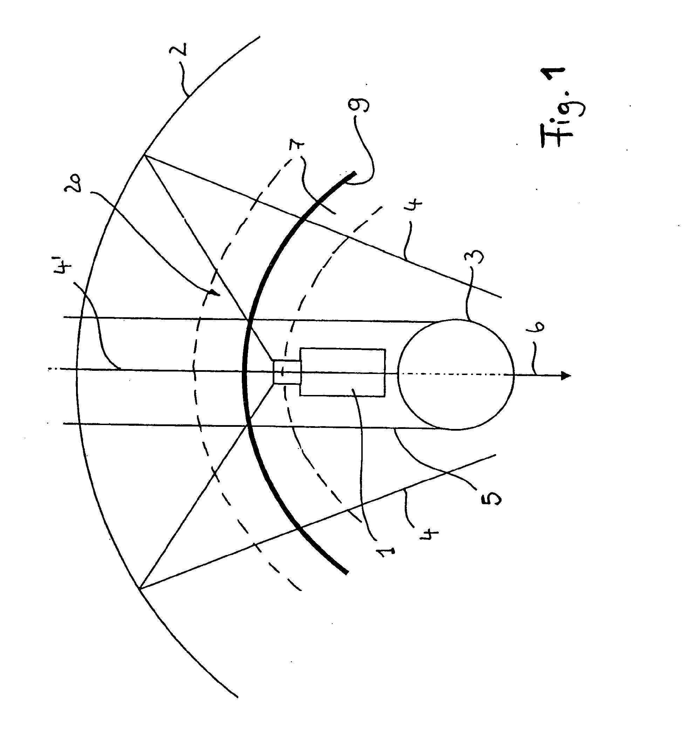

- Fig. 1: eine erfindungsgemäße Überwachungseinrichtung in einer Ansicht von oben,
wobei in der Figur der Übersichtlichkeit halber nur eine Kamera der Überwachungseinrichtung dargestellt ist.

Die erfindungsgemäße optische Überwachungseinrichtung weist drei Kameras 1 mit Objektiv sowie einen Ringspiegel 2 auf, der oberhalb der Kameras 1 angeordnet ist. Als Beispiel für ein zu überwachendes Werkzeug ist ferner ein Applikator 3 vorgesehen, welcher eine Kleberaupe 5 auf ein Substrat aufbringt. Die Vorschubrichtung des Applikators 3 ist in Figur 1 mit dem Bezugszeichen 6 bezeichnet. Der Applikator 3 ist in dem durch die kreisförmige Innenkontur (siehe Linie mit Bezugszeichen 2 in Fig. 1) des Ringspiegels begrenzten Ausschnitt angeordnet.

Um die Kameras 1 mit den Objektiven zu schützen, kann die Überwachungseinrichtung ein Gehäuse aufweisen, welche die Kameras 1 aufnimmt.

Als Überwachungsbereich 20 ist in dem dargestellten Ausführungsbeispiel ein Bereich ausgewählt, der um den Arbeitsbereich des Applikators 3 herum verläuft. Der Überwachungsbereich 20 erstreckt sich in etwa in einem hohlzylinderförmigen (Kreiszylinder) Bereich um die Längsachse des Applikators 3 herum. Hierbei verläuft die Längsachse des Applikators 3 senkrecht zur Ansicht in Fig. 1. Die äußeren Grenzen des Überwachungsbereichs 20 sind in Fig. 1 durch gestrichelte Linien angegeben. Der Überwachungsbereich ist vorzugsweise an Orten, die mit der Arbeit des Applikators 3 in Zusammenhang stehen, eingerichtet.

Der optische Pfad erstreckt sich von dem Überwachungsbereich 20 über den Ringspiegel 2 zur jeweiligen Kamera 1. Ggf. kann in dem optischen Pfad ein Planspiegel zwischen Überwachungsbereich 20 und Ringspiegel 2 oder zwischen Ringspiegel 2 und Kamera 1 angeordnet sein.

An der erfindungsgemäßen Überwachungseinrichtung ist außerdem eine nicht dargestellte Lichtlinieneinrichtung vorgesehen, welche auf einer planen und senkrecht zur Achse der Lichtlinie verlaufenden Unterlage eine Lichtlinie 9 in Form eines Kreises erzeugt. Die Lichtlinie ist in den Fig. 1 als fette Linie 9 dargestellt und verläuft über die Kleberaupe 5 hinweg. An jedem Punkt, an dem die Lichtlinie 9 über die Kleberaupe 5 hinweg verläuft, kann eine Triangulation durchgeführt werden und aus diesen Informationen die dreidimensionalen Abmessungen der Kleberaupe 5, beispielsweise deren Höhe bestimmt werden. Die Linie kann z.B. mit Hilfe eines Lasers und einer entsprechenden Ringoptik erzeugt werden.

Die Überwachungseinrichtung weist ferner zusätzlich eine Beleuchtungseinrichtung auf, welche in Richtung der Längsachse des Applikators 3 einen Lichtkreis 7 auf den Überwachungsbereich 20 projiziert. Die Lichtlinie 9 ist in dem dargestellten Ausführungsbeispiel derart angeordnet, dass sie im Randbereich des Lichtkreises 7 verläuft.

Die drei Kameras 1 sind um den Applikator 3 im Wesentlichen auf einer Kreisbahn derart angeordnet, dass die Sehstrahlen 4 jeder Kamera 1 nach einer Reflexion an dem Ringspiegel 2 jeweils auf einen Teilbereich des Überwachungsbereichs 20 ausgerichtet sind. Hierbei verläuft die Achse (dargestellt als zentraler Sehstrahl 4') der Blickrichtung jeder Kamera 1 radial zum Ringspiegel 2. Die Blickrichtung jeder Kamera 1 ist ferner vom Innenbereich des Ringspiegels 2 nach außen gerichtet. In Fig. 1 ist zu erkennen, dass die äußeren Sehstrahlen zunächst von der Kamera 1 ausgehend auseinanderlaufen und nach der Reflexion an dem Ringspiegel 2 auf Grund dessen ringförmiger Gestaltung wieder zusammengeführt werden. Der zentrale Sehstrahl 4' verläuft etwa radial zur Längsachse des Applikators 3. Durch diese Anordnung der Kameras 1 und Ringspiegel 2 und der Krümmung des Ringspiegels 2 ist der Einsatz lediglich einer kleinen Anzahl von Kameras notwendig, da mit jeder Kamera 1 ein großer Teil des Überwachungsbereichs abgedeckt wird.

Die äußeren Sehstrahlen 4 der Kameras 1 erfassen auch den am weitesten unten liegenden Teil des Überwachungsbereichs 20 und treffen von der Seite kommend (seitlich) auf den Überwachungsbereich auf. Es können somit die Abmessungen der Kleberaupe 5 in allen Dimensionen, insbesondere in ihrer in Richtung der Hochachse verlaufenden Dimension erfasst werden. Eine Überwachung des gesamten Überwachungsbereichs 20 gleichzeitig von der Seite ist somit möglich.

Nicht dargestellt ist in Figur 1 die den Lichtkreis 7 ausbildende Beleuchtungseinrichtung sowie die als Computersystem ausgebildete Auswerteeinrichtung. Der Auswerteeinrichtung werden die von den Kameras 1 erzeugten Bilder übertragen, so dass diese beispielsweise hinsichtlich der Abmessungen der Kleberaupe 5, insbesondere hinsichtlich der Höhe der Kleberaupe 5, verarbeitet werden können. Hierfür wird vorzugweise eine Bilderkennungssoftware verwendet und ein Triangulationsverfahren angewendet.

Mittels der in der Figur dargestellte erfindungsgemäße Überwachungseinrichtung kann eine Betrachtung eines Überwachungsbereichs von allen Seiten gleichzeitig realisiert werden.

### Bezugszeichenliste:

- 1: Kamera mit Objektiv
- 2: Ringspiegel
- 3: Applikator
- 4, 4': Sehstrahl
- 5: Kleberaupe
- 6: Vorschubrichtung
- 7: Lichtkreis
- 9: Lichtlinie
- 20: Überwachungsbereich

## Patentansprüche

1. Optische Überwachungseinrichtung zur Überwachung der Tätigkeit eines Werkzeugs (3) in einem Überwachungsbereich (20), aufweisend das Werkzeug (3), mindestens eine oberhalb des Überwachungsbereichs (20) angeordnete Kamera (1) und mindestens einen ersten Spiegel (2), wobei der erste Spiegel (2) wenigstens in einem Teilbereich konkav gekrümmt, im optischen Pfad zwischen Überwachungsbereich (20) und Kamera (1) angeordnet und als Ringspiegel ausgebildet ist, wobei das Werkzeug (3) in der durch die Innenkontur begrenzten Aussparung des Ringspielgels angeordnet ist und die Kamera (1) und der erste Spiegel (2) derart angeordnet sind, dass der Sichtbereich der Kamera (1) den Überwachungsbereich (20) von der Seite erfasst und dass der Sichtbereich der Kamera (1) mindestens teilweise radial zur Längsachse des Werkzeugs (3) verläuft.

2. Optische Überwachungseinrichtung nach Anspruch 1, wobei die Innenkontur des Ringspiegels (2) im Wesentlichen kreisförmig oder elliptisch ausgebildet ist.

3. Optische Überwachungseinrichtung nach einem der Ansprüche 1 oder 2, wobei der Mittelpunkt des Querschnitts des Ringspiegels (2) neben der Längsachse des Werkzeugs (3) angeordnet ist.

4. Optische Überwachungseinrichtung nach einem der vorhergehenden Ansprüche, wobei der Querschnitt durch den ersten Spiegel (2) zumindest abschnittsweise die Form eines Kreisabschnitts oder eines Ellipsenabschnitts aufweist.

5. Optische Überwachungseinrichtung nach einem der vorhergehenden Ansprüche, wobei die Blickrichtung der Kamera radial nach außen gerichtet ist.

6. Optische Überwachungseinrichtung nach einem der vorhergehenden Ansprüche, wobei zumindest eine Komponente der Achse der Blickrichtung der Kamera (1) beim Auftreffen auf den ersten Spiegel (2) radial zu diesem verläuft und dass die Blickrichtung nach außen gerichtet ist.

7. Optische Überwachungseinrichtung nach einem der vorhergehenden Ansprüche, wobei mindestens ein zweiter, vorzugsweise plan ausgebildeter Spiegel vorgesehen ist, der im optischen Pfad zwischen Kamera (1) und erstem Spiegel (2) und/oder erstem Spiegel (2) und Überwachungsbereich (20) angeordnet Ist.

8. Optische Überwachungseinrichtung nach einem der vorhergehenden Ansprüche, wobei der erste Spiegel (2) und/oder der zweite Spiegel schwenkbar oder verschiebbar ausgebildet ist.

9. Optische Überwachungseinrichtung nach, einem der vorhergehenden Ansprüche, wobei mindestens zwei Kameras (1), vorzugsweise drei Kameras (1) vorgesehen sind, deren Sichtbereiche sich vorzugsweise überlappen.

10. Optische Überwachungseinrichtung nach einem der vorhergehenden Ansprüche, wobei der erste Spiegel (2) und die Kamera (1) an dem Werkzeug (3) derart festlegbar sind, dass der Sichtbereich der Kamera (1) immer auf den Überwachungsbereich (20) ausgerichtet ist.

11. Optische Überwachungseinrichtung nach einem der vorhergehenden Ansprüche, wobei eine Beleuchtungseinrichtung vorgesehen ist, welche vorzugsweise als Blitzlicht oder Dauerlicht ausgebildet ist.

12. Optische Überwachungseinrichtun nach einem der vorhergehenden Ansprüche, wobei eine Lichtlinieneinrichtung vorgesehen ist, welche im Überwachungsbereich (20) eine Lichtlinie (9) zur Durchführung einer dreidimensionalen Trlangulatiorsmessung mittels der Kamera (1) erzeugt.

13. Optische Überwachungseinrichtung nach einem der vorhergehenden Ansprüche, wobei eine Auswerteeinrichtung, insbesondere ein Computersystem, vorgesehen ist, welche zur Steuerung der Kamera (1), des ersten Spiegels (2), des zweiten Spiegels, der Beleuchtungseinrichtung und/oder zur Auswertung der Bilder der Kamera (1) dient und/oder wobei
die Auswerteeinrichtung zur Durchführung von dreidimensionalen Messungen eingerichtet ist.

## Claims

1. Optical monitoring device for monitoring the operation of a tool (3) within a monitoring area (20) compromising the tool (3), at least one camera (1) accommodated above the monitoring area (20) and at least one first mirror (2), wherein the first mirror (2) is concavely curved in at least a partial area, wherein the first mirror (2) is a ring-shaped mirror and accommodated in the optical path between monitoring area (20) and camera (1), wherein the tool (3) is accommodated within the recess defined by the inner outline of the ring-shaped mirror, and wherein the camera (1) and the first mirror (2) are arranged such that the field of vision of the camera (1) covers the monitoring area (20) from the side and that the field of vision of the camera (1) extends at least partially radially with respect to the longitudinal axis of the tool (3).

2. Optical monitoring device according to claim 1, wherein the inner outline of the ring-shaped mirror (2) is basically formed circularly or elliptically.

3. Optical monitoring device according to claim 1 or 2, wherein the centre of the cross section of the ring-shaped mirror (2) is accommodated beside the longitudinal axis of the tool (3).

4. Optical monitoring device according to one of the preceding claims, wherein the cross section of the first mirror (2) is formed at least sectionally as a segment of a circle or a segment of an ellipse.

5. Optical monitoring device according to one of the preceding claims, wherein the viewing direction of the camera (1) is directed radially outwards.

6. Optical monitoring device according to one of the preceding claims, wherein at least one component of the axis of the viewing direction of the camera (1) extends radially with respect to the first mirror (2) where striking it and wherein the viewing direction is directed outwards.

7. Optical monitoring device according to one of the preceding claims, wherein at least a second, preferably plane mirror is provided and accommodated in the optical path between camera (1) and first mirror (2) and/or between first mirror (2) and monitoring area (20).

8. Optical monitoring device according to one of the preceding claims, wherein the first mirror (2) and/or the second mirror is/are pivotable or moveable.

9. Optical monitoring device according to one of the preceding claims, wherein at least two cameras (1), preferably three cameras (1), are provided whose fields of vision preferably overlap.

10. Optical monitoring device according to one of the preceding claims, wherein the first mirror (2) and the camera (2) are fixable on the tool (3) such that the field of vision of the camera (1) is always aligned with the monitoring area (20).

11. Optical monitoring device according to one of the preceding claims, wherein an illumination device is provided which is preferably a flashlight or a continuous light.

12. Optical monitoring device according to one of the preceding claims, wherein a light line device is provided which generates a line of light (9) within the monitoring area (20) for conducting a three-dimensional triangulation using the camera (1).

13. Optical monitoring device according to one of the preceding claims, wherein a processing member, in particular a computer system, is provided for controlling the camera (1), the first mirror (2), the second mirror, the illumination device and/or for processing the pictures of the camera (1), and/or wherein the processing member is adapted to conduct three-dimensional measurements.

## Revendications

1. Dispositif de surveillance optique destiné à surveiller l'activité d'un outil (3) dans une zone de surveillance (20) comportant l'outil (3), au moins une caméra (1) disposée au-dessus de la zone de surveillance (20) et au moins un premier miroir (2), le premier miroir (2) étant courbé de façon concave au moins dans une zone partielle, disposé dans une trajectoire optique entre la zone de surveillance (20) et la caméra (1) et constitué comme un miroir annulaire, l'outil (3) étant disposé dans l' évidement du miroir annulaire limité par le contour intérieur et la caméra (1) et le premier miroir (2) étant disposés de telle sorte que la zone de vision de la caméra (1) saisit la zone de surveillance (20) par le côté et la zone de vision de la caméra (1) passe au moins en partie radialement à l'axe longitudinal de l'outil (3) .

2. Dispositif de surveillance optique selon la revendication 1, dans lequel le contour intérieur du miroir annulaire (2) étant constitué pour l'essentiel de façon circulaire ou elliptique.

3. Dispositif de surveillance optique selon l'une quelconque des revendications 1 ou 2, dans lequel le centre de la section transversale du miroir annulaire (2) est disposé près de l'axe longitudinal de l'outil (3) .

4. Dispositif de surveillance optique selon l'une quelconque des revendications précédentes, dans lequel la section transversale présente à travers le premier miroir (2) au moins par segment la forme d'un segment circulaire ou d'un segment elliptique.

5. Dispositif de surveillance optique selon l'une quelconque des revendications précédentes, dans lequel le sens de regard de la caméra est orienté radialement vers l'extérieur.

6. Dispositif de surveillance optique selon l'une quelconque des revendications précédentes, dans lequel au moins un composant de l'axe du sens de regard de la caméra (1) lors de l'incidence sur le premier miroir (2) passe radialement à celui-ci et le sens de regard est orienté vers l'extérieur.

7. Dispositif de surveillance optique selon l'une quelconque des revendications précédentes, dans lequel est prévu au moins un deuxième miroir, de préférence constitué plan, qui est disposé dans la trajectoire optique entre la caméra (1) et le premier miroir (2) et/ou entre le premier miroir (2) et la zone de surveillance (20).

8. Dispositif de surveillance optique selon l'une quelconque des revendications précédentes, dans lequel le premier miroir (2) et/ou le deuxième miroir est constitué de manière à pouvoir pivoter ou être mobile.

9. Dispositif de surveillance optique selon l'une quelconque des revendications précédentes, dans lequel sont prévues au moins deux caméras (1), de préférence trois caméras (1), dont les zones de vision se chevauchent de préférence.

10. Dispositif de surveillance optique selon l'une quelconque des revendications précédentes, dans lequel le premier miroir (2) et la caméra (1) peuvent être placés près de l'outil (3) de telle sorte que la zone de vision de la caméra (1) est toujours orientée sur la zone de surveillance (20).

11. Dispositif de surveillance optique selon l'une quelconque des revendications précédentes, dans lequel est prévu un dispositif d'éclairage qui est constitué de préférence comme un flash ou une lumière permanente.

12. Dispositif de surveillance optique selon l'une quelconque des revendications précédentes, dans lequel est prévu un dispositif à lignes lumineuses qui produit dans la zone de surveillance (20) une ligne lumineuse (9) pour exécuter une mesure de triangulation tridimensionnelle au moyen de la caméra (1).

13. Dispositif de surveillance optique selon l'une quelconque des revendications précédentes, dans lequel est prévu un dispositif d'évaluation, en particulier un système informatique, qui sert à piloter la caméra (1), le premier miroir (2), le deuxième miroir, le dispositif d'éclairage et/ou à évaluer les images de la caméra (1) et/ou dans lequel le dispositif d'évaluation est arrangé pour exécuter des mesures tridimensionnelles.
